**Europäisches Patentamt**

**European Patent Office**

**Office européen des brevets**

(19)

(11) Veröffentlichungsnummer : **0 328 738 B1**

(12) # EUROPÄISCHE PATENTSCHRIFT

(45) Veröffentlichungstag der Patentschrift :
**13.03.91 Patentblatt 91/11**

(51) Int. Cl.$^5$ : **G02B 26/00, H04Q 3/52**

(21) Anmeldenummer : **88117463.5**

(22) Anmeldetag : **20.10.88**

(54) **Optisches Bauelement für faseroptische Übertragungssysteme.**

(30) Priorität : **12.02.88 DE 3804822**

(43) Veröffentlichungstag der Anmeldung :
**23.08.89 Patentblatt 89/34**

(45) Bekanntmachung des Hinweises auf die
Patenterteilung :
**13.03.91 Patentblatt 91/11**

(84) Benannte Vertragsstaaten :
**AT BE CH DE ES FR GB GR IT LI LU NL SE**

(56) Entgegenhaltungen :
**EP-A- 0 075 704**
**PATENT ABSTRACTS OF JAPAN, Band 4, Nr.**
**55 (P-008), 24. April 1980 & JP-A-55-26 558**

(73) Patentinhaber : **KRONE Aktiengesellschaft**
**Beeskowdamm 3-11**
**W-1000 Berlin 37 (DE)**

(72) Erfinder : **Mrozynski, Gerd, Prof. Dr.**
**Helmarshauser Weg 2b**
**W-4790 Paderborn (DE)**

## Beschreibung

Die Erfindung bezieht sich auf ein optisches Bauelement für zwei oder mehrere optische Fasern gemäß dem Oberbegriff des Anspruches 1. Ein derartiges optisches Bauelement wird in faseroptischen Übertragunssystemen verwendet.

Ein optisches Bauelement der gattungsgemäßen Art ist aus der EP 0.075.704 A3 vorbekannt. Hierbei befindet sich in dem spaltförmigen Führungsraum zwischen den beiden Halterungen für die Fasern eine Flüssigkeit als Einstellglied. Auf die Führungsraumflächen der Halterungen wird je Faser je ein Elektrodenpaar aufgebracht, das jeweils aus einer oberen und einer davon getrennten unteren Elektrode gebildet ist. In den spaltförmigen Führungsraum wird pro fluchtendem Faserpaar je ein Flüssigkeitstropfenpaar eingebracht, das aus zwei Flüssigkeiten mit unterschiedlichen Dielektrika besteht, von denen eine durchsichtig und die andere undurchsichtig ist. Zur vertikalen Verschiebung eines jeden Tropfenpaares wird zwischen die obere Elektrode oder die untere Elektrode auf der einen Halterung und der zugehörigen Elektrode auf der anderen Halterung des zugeordneten Elektrodenpaares eine Spannung angelegt. Wird die Spannung zwischen der oberen Elektrode und der unteren Elektrode angelegt, wird das Flüssigkeitstropfenpaar in der einen Richtung vertikal verschoben. Wird dagegen die Spannung zwischen der unteren Elektrode und der oberen Elektrode angelegt, wird das Flüssigkeitstropfenpaar in entgegengesetzter Richtung vertikal verschoben. Es kann auf diese Weise wahlweise der durchsichtige Tropfen oder der undurchsichtige Tropfen zwischen die zugeordneten fluchtenden Fasern gebracht werden. Wesentlich ist, daß in dem spaltförmigen Führungsraum überhaupt ein elektrisches Feld erzeugt wird. Dieses optische Bauelement kann jedoch nur als Ein-/Ausschalter bzw. Umschalter für zwei Glasfasern dienen.

Es sind darüber hinaus optische Bauelemente als Dämpfungsglied, Filter, Leistungsteiler oder dergleichen vorbekannt. So besteht ein optisches Dämpfungsglied aus einem kastenartigen Gehäuse, in dessen gegenüberliegenden Seitenwänden Halterungen in Form von Kupplungen für die optischen Fasern ausgebildet sind. Diesen sind auf den Innenseiten des Gehäuses Abbildungsoptiken in Form von Kugellinsen zur Strahlaufweitung zugeordnet. Innerhalb des Innenraumes ist eine kreisförmige Scheibe mittels Achsstummeln in den Seitenwänden des Gehäuses gelagert, wobei die optische Achse der Fasern in einem Abstand zur Drehachse der Scheibe angeordnet ist. Die Scheibe trägt als Filtermagazin verschiedene Filterscheiben, denen je eine Raststellung zugeordnet ist. Durch Drehen der Filterscheibe kann diese in unterschiedliche Raststellungen gedreht werden, so daß unterschiedliche Dämpfungswerte einstellbar sind.

Nachteilig hierbei ist, daß die Einstellung der unterschiedlichen Filter jeweils manuell unmittelbar am optischen Dämpfungsglied erfolgen muß

Der Erfindung liegt von daher die Aufgabe zugrunde, ein optisches Bauelement der gattungsgemäßen Art zu schaffen, das bei Fernbetätigung des Einstellgliedes als Dämpfungsglied, Filter, Leistungsteiler oder dergleichen ausbildbar ist.

Die Lösung dieser Aufgabe ergibt sich aus den kennzeichnenden Merkmalen des Anspruches 1. Das erfindungsgemäße optische Bauelement bewirkt aufgrund eines definierten Eingangssignales über die Steuerung eine lokale Verschiebung des elektrischen Feldes zwischen den Führungsplatten, die gleichzeitig Halterung bzw. Träger der optischen Fasern sind und gegebenenfalls mit Abbildungsoptiken versehen sind. Mit dem elektrischen Feld wird die mit unterschiedlichen optischen Eigenschaften ausgebildete Einstellplatte in vorbestimmte, diskrete Lagen positioniert, so daß unterschiedliche Dämpfungswerte, Filterkurven, Leistungsteilungen oder dergleichen möglich sind. Das erfindungsgemäße optische Bauelement ist somit als fernsteuerbares Dämpfungsglied oder als fernsteuerbarer Filter, Leistungsteiler oder dergleichen ausbildbar.

Weitere vorteilhafte Ausgestaltungen der Erfindung ergeben sich aus den Unteransprüchen.

Die Erfindung ist nachfolgend anhand mehrerer, in den Zeichnungen dargestellter Ausführungsformen von optischen Bauelementen näher erläutert. Es zeigen :

Fig. 1 das physikalische Prinzip des optischen Bauelementes,

Fig. 2 die erste Ausführungsform des optischen Bauelementes in einem Vertikalschnitt,

Fig. 3 das optische Bauelement gemäß Fig. 2 in einem gedrehten Vertikalschnitt,

Fig. 4 einen Horizontalschnitt durch die zweite Ausführungsform des optischen Bauelementes,

Fig. 5 einen Horizontalschnitt durch die dritte Ausführungsform des optischen Bauelementes,

Fig. 6 einen Horizontalschnitt durch die vierte Ausführungsform des optischen Bauelementes,

Fig. 7 einen Horizonalschnitt durch die fünfte Ausführungsform des optischen Bauelementes,

Fig. 8 einen Vertikalschnitt durch das optische Bauelement in der fünften Ausführungsform,

Fig. 9 eine Prinzipdarstellung einer Abbildungsoptik,

Fig. 10 eine Prinzipdarstellung der sechsten Ausführungsform des optischen Bauelementes als elektrisch einstellbarer optischer Leistungsteiler,

Fig. 11 die siebte Ausführungsform des optischen Bauelementes als elektrisch einstellbarer optischer Leistungsteiler,

Fig. 12 einen Horizontalschnitt durch die achte Ausführungsform des optischen Bauelementes als elektrisch einstellbares optisches Filter,

Fig. 13 den prinzipiellen Verlauf der transmittierten Leistung des optischen Filters gemäß Fig. 12 als Funktion der Wellenlänge und der Einstellung der Einstellplatte und

Fig. 14 die neunte Ausführungsform des optischen Bauelementes als elektrisch steuerbarer optischer Umschalter.

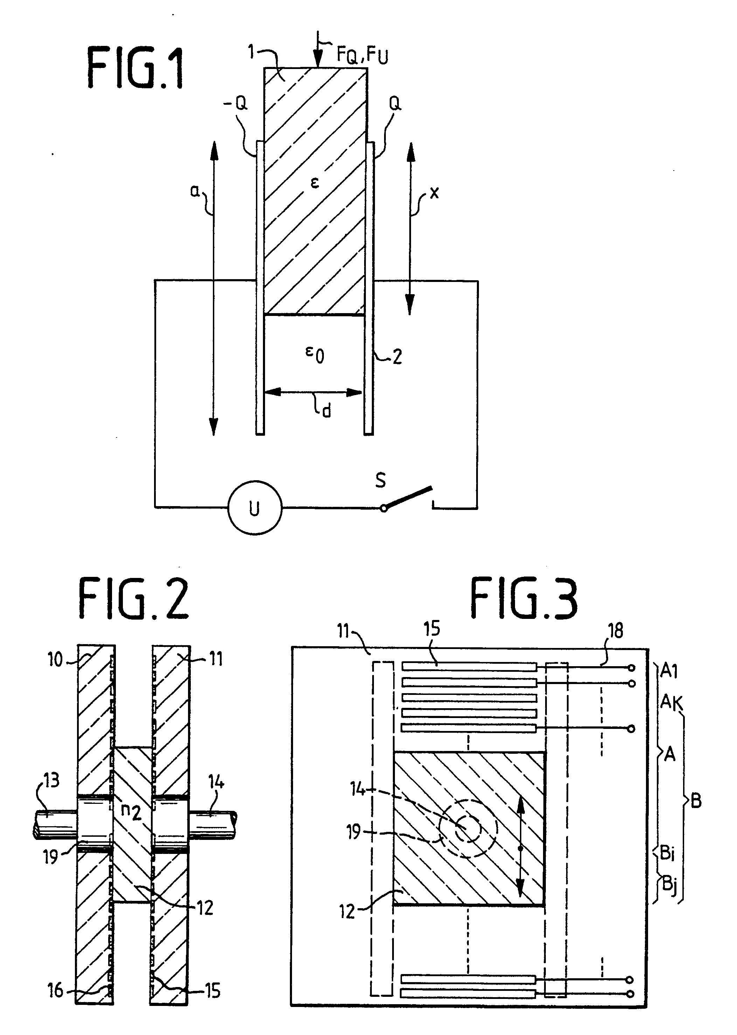

Die physikalische Grundlage des erfindungsgemäßen optischen Bauelementes ist die Tatsache, daß ein bewegliches Dielektrikum 1 im Feld eines Plattenkondensators 2 in diesen hineingezogen wird, wenn das Dielektrikum 1 sich zunächst gemäß Fig. 1 zum Teil außerhalb der Wirkung des Feldes befindet (Übergang zum Teil in den Zustand minimaler Energie). Die Kraft F auf das Dielektrikum 1 ist bei konstanter Ladung Q auf den Kondensatorplatten 2

$$F_Q = \frac{1}{2} \cdot \frac{\varepsilon - \varepsilon_0}{[\varepsilon_0 a + (\varepsilon - \varepsilon_0) x]^2} \cdot \frac{d}{h} Q^2$$

wobei gilt : $x < a$,

wenn $\varepsilon_0$ die Dielektrizitätskonstante des umgebenen Raumes, $\varepsilon$ die Dielektrizitätskonstante des Dielektrikums 1 und h die Abmessung des Systems senkrecht zur Zeichenebene ist. Die restlichen Größen werden gemäß Fig. 1 eingeführt.

Bei konstanter Spannung U hat diese Kraft den Wert

$$F_U = \frac{1}{2} (\varepsilon - \varepsilon_0) \cdot U^2 \cdot \frac{h}{d}$$

wobei gilt : $x < a$.

Auf dieser physikalischen Grundlage basiert das erfindungsgemäße optische Bauelement, gemäß welchem das Dielektrikum 1 mit einem elektrischen Feld zwischen den Kondensatorplatten 2 in diskreten Lagen exakt positionierbar ist.

Die Fig. 2 und 3 zeigen die erste Ausführungsform des optischen Bauelementes, das aus zwei parallelen Führungsplatten 10, 11 im Abstand d und einer dazwischen beweglichen Einstellplatte 12 besteht. In die Führungsplatten 10, 11 sind die optischen Fasern 13, 14 mit ihren Abbildungsoptiken 19 so eingesetzt, daß deren freie Stirnflächen der beweglichen Einstellplatte 12 gegenüberliegen. Die Führungsplatten 10, 11 und die Einstellplatte 12 bestehen aus dielektrischem Material, z. B. Glasscheiben. Auf die Innenseiten der Führungsplatten 10, 11 sind jeweils parallele Reihen von leitfähigen Elektrodenstreifen 15, 16 aufgebracht. Diese können aus aufgedampftem, transparenten Material bestehen. Die einzelnen Elektrodenstreifen 15, 16 einer jeden Führungsplatte 10, 11 sind mit Anschlüssen 18 versehen, welche an eine nicht näher dargestellte Steuerung angeschlossen sind, die die Spannungsumschaltung zwischen den einzelnen Elektrodenstreifen 15, 16 vornimmt.

Das gesamte optische Bauelement aus den Führungsplatten 10, 11 und der Einstellplatte 12 befindet sich innerhalb eines hermetisch verschlossenen Gehäuses, welches mit indexangepaßter Flüssigkeit ausgefüllt ist.

Durch Zuschaltung der Spannung an den Elektroden 15, 16 bzw. deren Anschlüssen 18, welche mit den Buchstaben $B_i$ bis $B_j$ bezeichnet sind, und durch Abschalten der Spannung an den Elektroden 15, 16 bzw. deren Anschlüssen 18, welche mit $A_i$ bis $A_k$ bezeichnet sind, wandert das elektrische Feld. Aufgrund der einleitend beschriebenen physikalischen Grundlage wandert die dielektrische Einstellplatte 12 in jeweils neue Lagen und kann, je nach Anzahl, Abstand und Größe der Elektroden 15, 16 eine Vielzahl diskreter Lagen einnehmen. Die Reibung wird dabei durch die Einfügung der indexangepaßten Flüssigkeit äußerst gering gehalten.

Die Zuführung der Spannung zu den Elektrodenstreifen 15, 16 beider Führungsplatten 10, 11 kann derart erfolgen, daß die notwendigen Umschaltungen durch Halbleiterbauelemente realisiert werden, die in Chip-on-Glas-Technik auf einer der Führungsplatten 10, 11 realisiert sind. Dies ist eine übliche Technik bei LCD-Bausteinen. Dann sind den Halbleiterbauelementen allein die Spannungen zum Aufbau des Feldes an einem Punkt und die notwendigen Steuersignale zuzuführen.

Der Leistungsumsatz ist extrem klein, weil die Arbeit zum Bewegen der Einstellplatte 12 in eine neue Position nur gering ist. Es müssen lediglich Teilkapazitäten geladen werden. Die davon und von der Trägheit der Einstellplatte 12 bestimmten Zeiten zur Neufixierung der Einstellplatte 12 liegen im ms-Bereich.

In einer technischen Ausführungsform muß die Einstellplatte 12 wegen der erwünschten Bewegung in nur einer geradlinigen Koordinate durch das Feld selbst oder durch eine Nut bzw. durch Distanzstücke fixiert werden. Da die Fixierung jedoch auch bei abgeschalteter Spannung zweckmäßigerweise aufrechterhalten bleiben soll, ist eine mechanische Fixierung vorteilhaft.

Die Anfangslage muß durch eine Inertialisierung elektrisch oder mit mechanischen Mitteln erfolgen, z. B. durch ein elektrisches Lauffeld über den gesamten Wegebereich und danach über eine gezielte Bewegung in eine definierte Anfangslage.

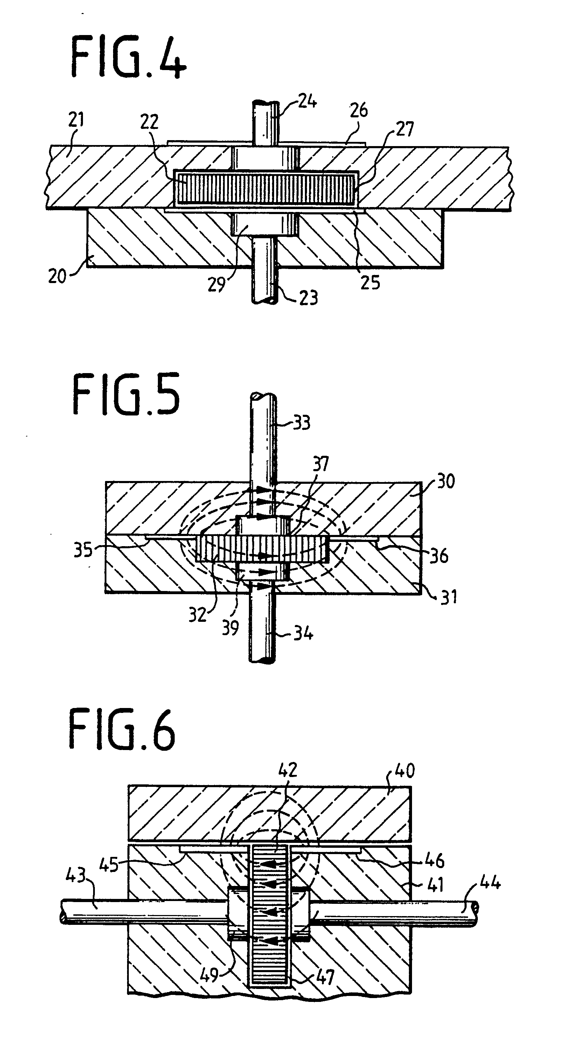

In der zweiten Ausführungsform gemäß Fig. 4 ist ein optisches Bauelement aus zwei Führungsplatten 20, 21 und einer Einstellplatte 22 dargestellt, welche in einem Führungsraum 27 geführt ist, der in die Führungsplatte 21 eingelassen ist. Die Elektrodenstreifen 25, 26 befinden sich auf den Oberflächen beider Führungsplatten 20, 21 jeweils im Bereich der Einstellplatte 22. Den Fasern 23, 24 sind Abbildungsoptiken 29 zugeordnet.

In der Fig. 5 ist die dritte Ausführungsform dargestellt, welche für eine einfache Fertigung besonders vorteilhaft ist. Hierbei sind den Fasern 33, 34 jeweils Abbildungsoptiken 39 zugeordnet. Bei dieser ist nur die eine dielektrische Führungsplatte 31, in welcher der Führungsraum 37 für die Einstellplatte 32 ausgenommen ist, mit zwei Reihen von Elektrodenstreifen 35, 36 bedampft, die beidseits des Führungsraumes 37 für die Einstellplatte 32 angeordnet sind. In gleicher Weise könnte die Führungsplatte 31 anstelle der Elektrodenstreifen 35, 36 in Chip-on-Glas-Technik mit Halbleiterbauelementen versehen sein. Die notwendige Spannung zum Erzielen der gleichen Kraftwirkung wie in den ersten beiden Ausführungsformen ist jedoch größer.

Die in der Fig. 6 dargestellte vierte Ausführungsform besteht aus einer ebenen Führungsplatte 40, aus der mit dem Führungsraum 47 für die Einstellplatte 42 versehenen zweiten Führungplatte 41, in welche die optischen Fasern 43, 44 mittels Abbildungsoptiken 49 eingesetzt sind, und aus zwei Reihen von Elektrodenstreifen 45, 46, die auf beiden Randbereichen des Führungsraumes 47 der Führungsplatte 41 ausgebildet sind. Diese kann z. B. als elektrisch einstellbares optisches Dämpfungsglied Anwendung finden.

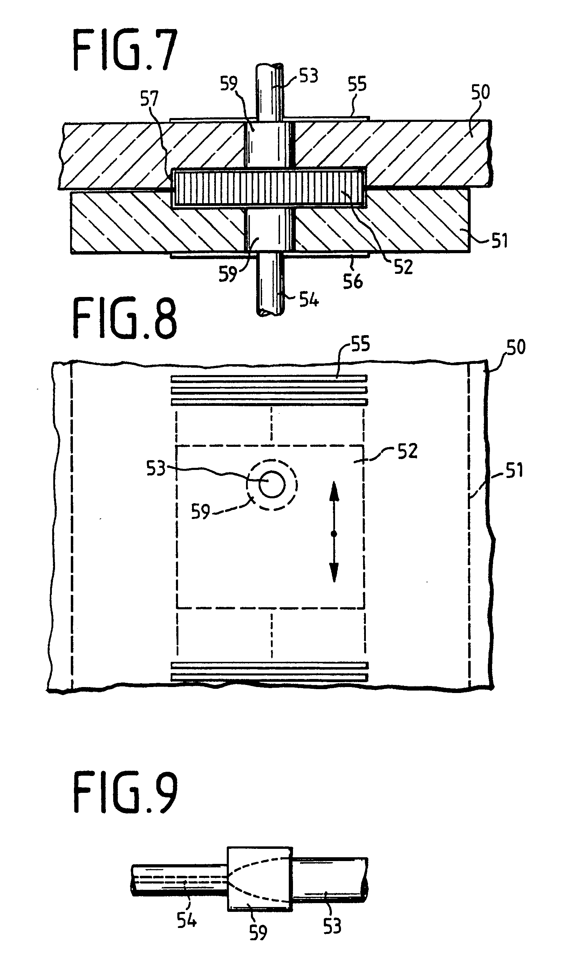

Bei der in Fig. 7 und 8 dargestellten fünften Ausführungsform eines optischen Bauelementes ist im Unterschied zur vierten Ausführungsform die Führungsnut 57 für die Einstellplatte 52 gleichmäßig in beiden Führungsplatten 50, 51 ausgebildet. Die Elektrodenstreifen 55, 56 befinden sich jeweils auf den Außenseiten der Führungsplatten 50, 51 im Bereich des Führungsraumes 57 bzw. der darin bewegbar geführten Einstellplatte 56. Die Fasern 53, 54 enden in Abbildungsoptiken 59, die in die Führungsplatten 50, 51 eingesetzt sind.

Die Fig. 9 zeigt eine Abbildungsoptik 59 zwischen einer Faser 53 als kollimiertes Bündel und dem Faserende der anderen Faser 54.

Nachfolgend werden spezielle optische Bauelemente näher beschrieben, die auf der einleitend abgehandelten physikalischen Grundlage basieren und die Ausführungsformen der Figuren 2 bis 7 zur Fixierung der Einstellplatte bzw. zur Ausgestaltung des elektrischen Feldes anwenden und nur beispielhaft zu verstehen sind, weil grundsätzlich immer alle Ausführungsformen möglich sind.

Auf optischen Übertragungsstrecken muß die Streckendämpfung auf einen Sollwert eingestellt und langzeitlich konstant gehalten werden. Abhängig vom Empfangspegel kann ein Telemetriesignal zum Transmitter übertragen und ein optisches Dämpfungsglied durch ein Steuersignal so eingestellt werden, daß die Abweichung der Dämpfung vom Sollwert unterhalb einer vorgegebenen Schranke bleibt. Zur Realisierung dieser Funktionen dient z. B. die fünfte Ausführungsform gemäß den Fig. 7 und 8 als elektrisch einstellbares optisches Dämpfungsglied. Dabei wird zwischen den Stirnflächen der optischen Fasern 53, 54 aufgrund der einleitend beschriebenen physikalischen Grundlage die Einstellplatte 52, d. h. eine dielektrische Scheibe mit in Längsausdehnung variabler Transmission, bewegt. Je nach der Position der Einstellplatte 52 kann die Dämpfung zwischen einem Maximalwert und einem Minimalwert in Stufen fest eingestellt werden, die von der Anzahl der Elektrodenstreifen 55, 56 und der stetigen Änderung der Transmission der Einstellplatte 52 abhängig ist. Hierbei hat der Führungsraum 57 eine Tiefe, welche der Breite der Einstellplatte 52 entspricht.

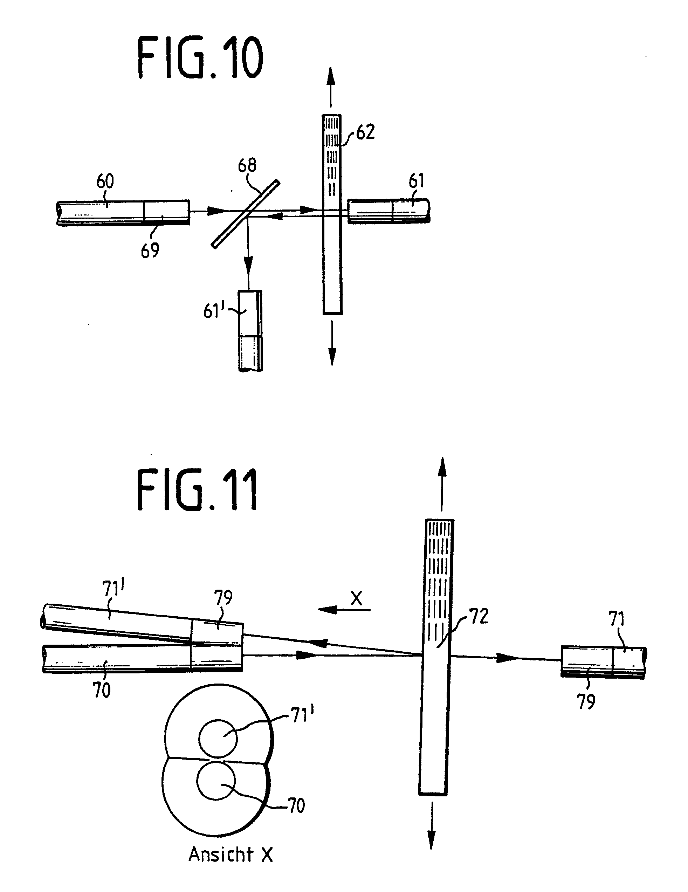

Die Fig. 10 und 11 zeigen in Prinzipdarstellungen die sechste bzw. siebte Ausführungsform des optischen Bauelementes als optischer Leistungsteiler mit elektrisch einstellbarem Teilungsverhältnis. In Nachrichtennetzen mit optischer Übertragung ist die Auskopplung eines definierten Anteils der optischen Leistung aus dem Übertragungsweg eine wichtige Funktion.

In den in den Figuren 10 und 11 im Prinzip dargestellten optischen Bauelementen eines elektrisch steuerbaren Leistungsteilers wird eine Einstellplatte 62 bzw. 72 aus abschnittsweise verschiedenen Interferenzfiltern gemäß den voranstehend beschriebenen Ausführungsformen eines optischen Bauelementes in den optischen Weg zwischen Eingangsfaser 60, 70 und zwei Ausgangsfasern 61, 61' bzw. 71, 71' gebracht. Durch elektrische Steuersignale wird die Führungsplatte 62, 72 in Schritten diskreter Größe in ausgewählte Positionen zwischen den nicht dargestellten Führungsplatten gebracht, welche die ebenfalls nicht dargestellten Elektrodenstreifen tragen. Dabei werden im optischen Strahlengang Filter mit variabler Transmission bzw. Reflektion wirksam, welche durch die Einstellplatten 62 bzw. 72 gebildet sind. Der reflektierte optische Leistungsanteil wird über einen halbdurchlässigen Spiegel 68 in eine Ausgangsfaser 61' ausgekoppelt (Fig. 10).

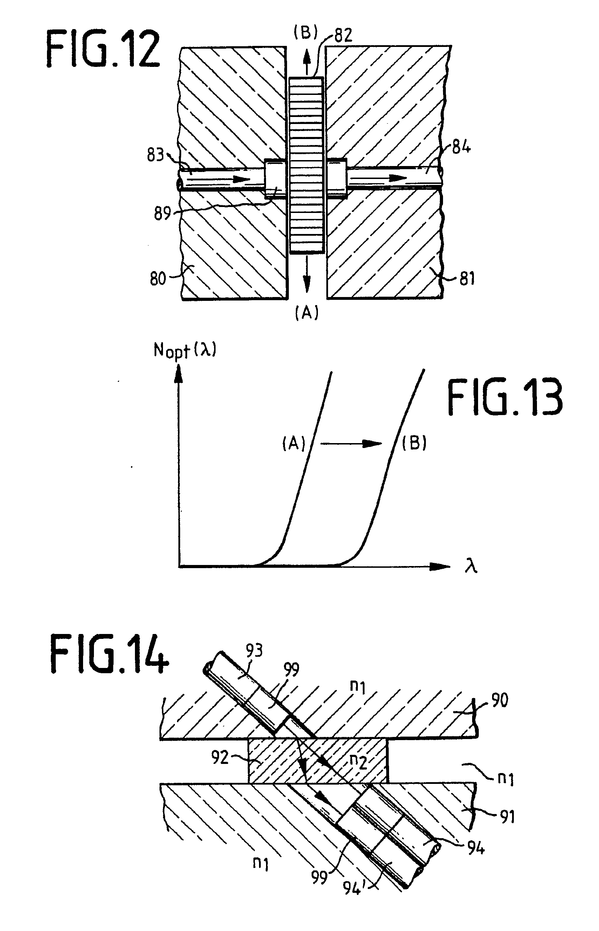

Die Fig. 12 zeigt die achte Ausführungsform eines optischen Bauelementes als elektrisch einstellbares optisches Filter. In Wellenlängenmultiplexübertragungssystemen muß am Ende der Strecke ein Filter zur Selektion des Signals einer bestimmten Wellenlänge verwendet werden. Mit einem abstimmbaren Filter sind Signale verschiedener Wellenlängen einfach zu trennen. Hierbei bildet die Einstellplatte 82 das Filter, dessen Lage elektrisch steuerbar ist. Das Filter ist zwischen den Führungsplatten 80, 81 nach dem voranstehend beschriebenen Prinzip zwischen den Stirnseiten der Eingangsfaser 83 und der Ausgangsfaser 84 bewegbar.

Die Fig. 13 zeigt den prinzipiellen Verlauf der ausgekoppelten optischen Leistung bei unterschiedlichen Wellenlängen $\lambda$ und Bewegung der Einstellplatte 82 in Richtung Pfeil A (Kurve A) bzw. in Richtung Pfeil B (Kurve B).

Schließlich ist in Fig. 14 als neunte Ausführungsform des optischen Bauelementes ein elektrisch steuerbarer optischer Umschalter dargestellt. In Netzen mit optischer Übertragung ist es sinnvoll, Ersatzwege beim Ausfall einzelner Komponenten oder Netzzweige zu schalten, z. B. in lokalen Netzen mit Ringstruktur. Hierzu sind optische Umschalter erforderlich, die das Signal einer Faser, der Eingangsfaser 93, in eine von zwei möglichen Ausgangsfasern 94, 94' einkoppeln. Bekannte Schalter nutzen hierzu eine direkte mechanische oder piezoelektrisch gesteuerte Bewegung der Faser aus. Mit der Anordnung der Einstellplatte 92 zwischen zwei Führungsplatten 90, 91, welche jeweils aus dielektrischem Material bestehen, kann mit der transparenten dielektrischen Einstellplatte 92 eine einfache Umschaltung erreicht werden, wenn deren Brechzahl $n_2$ im Gegensatz zur Brechzahl $n_1$ der übrigen Materialien geeignet gewählt wird. Damit lassen sich auch optische Koppelmatrizen aufbauen, die in optischen Vermittlungsnetzen einzusetzen sind.

Optische Schalter lassen sich auch mit einer Anordnung realisieren, welche mit der in den Figuren 7 und 8 dargestellten fünften Ausführungsform des optischen Bauelementes identisch ist, wenn die Ein stellplatte 52 durch eine nichttransparente Einstellplatte ersetzt wird, die in einer indexangepaßten Flüssigkeit bewegt wird. Derartige Schalter können auch mit sehr großen Faserkerndurchmessern als optische Schalter in Anzeigesytemen mit faseroptischer Lichtführung eingesetzt werden und dort andere, weniger effektive Schalter ersetzen. Dabei ist es zweckmäßig, Schaltarrays aufzubauen, deren Dimension an Zeichen- oder Bildgrößen orientiert ist.

## Ansprüche

1. Optisches Bauelement für zwei oder mehrere optische Fasern (13, 14 ; 23, 24 ;...), welches Bauelement aus mindestens zwei Halterungen (10, 11 ; 20, 21 ;...) für die Fasern, aus einem zwischen den Halterungen gebildeten Führungsraum (27, 37,...) für ein in diesem bewegbares Einstellglied (12, 22,...) und

aus im Führungsraum angeordneten, an eine regelbare Spannungsquelle anschließbaren Elektrodenflächen zum Aufbau eines elektrischen Feldes zur Bewegung des Einstellgliedes im Führungsraum besteht, **dadurch gekennzeichnet,** daß das Einstellglied (12, 22,...) aus einer Platte, die aus dielektrischen Material besteht, ausgebildet ist ; daß die halterungen (10, 11 ; 20, 21 ;...) als Platten ausgebildet sind, zwischen denen das Einstellglied (12, 22,...) geführt wird ; und

daß die Elektrodenflächen aus einer Vielzahl, im Abstand voneinander angeordneten, mit Anschlüssen (18) verse henen und an eine Steuerung angeschlossenen Elektro denstreifen (15, 16 ; 25, 26 ;...) besteht, wobei die Steuerung eine Spannungsumschaltung zwischen den einzelnen Elektrodenstreifen (15, 16 ; 25, 26 ;...) ermöglicht, um so ein wanderndes elektrisches Feld zwischen den Halterungs platten (10, 11 ; 20, 21;...) zur linearen Verstellung der Einstellplatte (12 ; 22 ;) in eine Vielzahl diskreter Lagen zu erzeugen.

2. Optisches Bauelement nach Anspruch 1, **dadurch gekennzeichnet,** daß das dielektrische Material Glas ist.

3. Optisches Bauelement nach Anspruch 1, **dadurch gekennzeichnet,** daß die Elektrodenstreifen (15, 16; 25, 26 ;...) aus leitfähigem, transparentem Material ausgebildet sind.

4. Optisches Bauelement nach einem der Ansprüche 1 oder 3, **dadurch gekennzeichnet,** daß die Elektrodenstreifen (15, 16 ; 25, 26 ;...) auf die Innenflächen der Halterungsplatten (10, 11 ; 20, 21 ;...) aufgedampft sind.

5. Optisches Bauelement nach einem der Ansprüche 1 bis 4, **dadurch gekennzeichnet,** daß der Führungsraum (17 ; 27 ;...) für die Einstellplatte (12 ; 22 ;...) in einer Ausnehmung der einen Halterungsplatte (11 ; 21 ;...) ausgebildet ist.

6. Optisches Bauelement nach einem der Ansprüche 1 bis 5, **dadurch gekennzeichnet,** daß die Elektrodenstreifen (15, 16 ; 25, 26 ;...) als zwei parallele Reihen auf den dem Führungsraum (17 ; 27 ;...) zugeordneten Flächen der Halterungsplatten (10, 11 ; 20, 21 ;...) ausgebildet sind.

7. Optisches Bauelement nach einem der Ansprüche 1 bis 5, **dadurch gekennzeichnet,** daß die Elektrodenstreifen (15, 16 ; 25, 26 ;...) als zwei parallele Reihen auf den seitlichen Oberflächen des Führungsraumes (37 ; 47) der einen Halterungsplatte (31 ; 41) ausgebildet sind.

8. Optisches Bauelement nach einem der Ansprüche 1 bis 7, **dadurch gekennzeichnet,** daß die Dicke der Führungsplatte (12 ; 22 ;...) die Tiefe des Halterungsraumes (17 ; 27 ;...) bildet.

9. Optisches Bauelement nach einem der Ansprüche 1 bis 7, **dadurch gekennzeichnet,** daß die Breite der Halterungsplatte (42) die Tiefe des Führungsraumes (47) bildet.

10. Optisches Bauelement nach einem der Ansprüche 1 bis 9, **dadurch gekennzeichnet,** daß der Führungsraum (57) aus zwei Ausnehmungen in den Oberflächen beider Halterungsplatten (50, 51) ausgebildet ist und daß die Elektrodenstreifen (55, 56) auf den Außenwänden der Halterungsplatten (50, 51) im Bereich der Einstellplatte (52) ausgebildet sind.


**Claims**

1. An optical component for two or more optical fibres (13, 14 ; 23, 24 ;...) comprising at least two supports (10, 11 ; 21, 22 ;...) for the fibres, a guide space (27, 37,...) formed between said supports for an adjustment member (12, 22,...) movable therein, and electrode surfaces disposed in said guide space (27, 37,...) to be connected to an adjustable power supply for generating an electrical field for moving the adjustment member within the guide space,

characterised by that the adjustment member (12, 22,...) is formed of a plate of dielectric material ;

that the supports (10, 11 ; 21, 22 ;...) are formed as plates between which the adjustment member (12, 22,...) is guided ; and

that the electrode surfaces are formed of a plurality of spaced electrode strips (15, 16 ; 25, 26 ;...) provided with terminals (18) and connected to a control system allowing a commutation of voltage between the individual electrode strips (15, 16 ; 25, 26 ;...) in order to generate thus a travelling electrical field between the support plates (10, 11 ; 20, 21 ;...) for linearly displaceing the adjustment plate (12, 22, ...) into a plurality of distinct positions.

2. An optical component according to claim 1,
characterised by that the dielectric material is glass.

3. An optical component according to claim 1,
characterised by that the electrode strips (15, 16 ; 25, 26 ;...) are made of a conductive, transparent material.

4. An optical component according to one of claims 1 or 3,
characterised by that the electrode strips (15, 16 ; 25, 26 ;...) are vapourised on the interior surfaces of the support plates (10, 11 ; 20, 21 ;...).

5. An optical component according to one of claims 1 to 4,
characterised by that the guide space (17, 27, ...) for the adjustment plate (12, 22,...) is formed in a recess of one of the support plates (11, 21,...).

6. An optical component according to one of claims 1 to 5,
characterised by that the electrode strips (15, 16 ; 25, 26 ;...) are formed as two parallel rows on the faces assigned to the guide space (17, 27,...) of the support plates (10, 11 ; 20, 21 ;...).

7. An optical component according to one of claims 1 to 5,
characterised by that the electrode strips (15, 16 ; 25, 26 ;...) are formed as two parallel rows on the lateral surfaces of the guide space (37, 47, ...) of one support plates (31, 41).

8. An optical component according to one of claims 1 to 7,
characterised by that the thickness of the support plate (12, 22,...) corresponds to the depth of the guide space (17, 27,...).

9. An optical component according to one of claims 1 to 7,
characterised by that the width of the support plate (42) corresponds to the depth of the guide space (47).

10. An optical component according to one of claims 1 to 9,
characterised by that the guide space (57) is formed of two recesses in the surfaces of the two support plates (50, 51), and

that the electrode strips (55, 56) are formed on the exterior walls of the support plates (50, 51) in the area of the adjustment plate (52).

## Revendications

1. Composant optique pour deux ou plusieurs fibres optiques (13, 14 ; 23, 24 ;...), ledit composant étant composé d'au moins deux supports (10, 11 ; 20, 21 ;...) pour les fibres, d'un espace de guidage (27, 37,...) disposé entre lesdits supports pour un membre de réglage (12, 22,...) amovible là-dedans, et de surfaces d'électrode disposées dans l'espace de guidage (27, 37,...) et raccordable à une source de tension réglable pour la génération d'un champ électrique pour le mouvement dudit membre de réglage dans ledit espace de guidage, caractérisé en ce que le membre de réglage (12, 22, ...) est formé d'une plaque en matière diélectrique ; que les supports (10, 11 ; 20, 21 ;...) sont réalisés sous la forme de plaques, entre lesquelles le membre de réglage (12, 22,...) est guidé ; et que les surfaces d'électrode se composent d'une pluralité de bandes d'électrode (15, 16 ; 25, 26 ;...) séparées les unes des autres et pourvues de raccords (18) et raccordées à un système de commande, qui permet une commutation de la tension entre les bandes d'électrode (15 ; 16 ; 25, 26 ;...) individuelles pour générer un champ électrique progressif entre les plaques de support (10, 11 ; 20, 21 ;...) pour le réglage linéaire du membre de réglage (12, 22,...) en une pluralité de positions discrètes.

2. Composant optique selon la revendication 1, caractérisé en ce que la matière diélectrique est verre.

3. Composant optique selon la revendication 1, caractérisé en ce que les bandes d'électrode (15, 16 ; 25, 26 ;...) sont formées d'une matière conductrice et transparente.

4. Composant optique selon une des revendications 1 ou 3, caractérisé en ce que les bandes d'électrode (15, 16 ; 25, 26 ;...) sont appliquées par métallisation sur les faces intérieures des plaques de support (10, 11 ; 20, 21 ;...).

5. Composant optique selon une des revendications 1 à 4, caractérisé en ce que l'espace de guidage (17, 27, ...) pour la plaque de réglage (12, 22,...) est formé dans un creux de l'une plaque de support (11, 21,...).

6. Composant optique selon une des revendications 1 à 5, caractérisé en ce que les bandes d'électrode (15, 16 ; 25, 26 ;...) sont formées comme deux lignes parallèles sur les faces des plaques de support (10, 11 ; 20, 21 ; ...) adjointes à l'espace de guidage (17, 27,...).

7. Composant optique selon une des revendications 1 à 5, caractérisé en ce que les bandes d'électrode (15, 16 ; 25, 26 ;...) sont formées comme deux lignes parallèles sur les surfaces latérales de l'espace de guidage (37, 47) de l'une plaque de support (31, 41).

8. Composant optique selon une des revendications 1 à 7, caractérisé en ce que l'épaisseur de la plaque de support (12, 22,...) correspond à la profondeur de l'espace de guidage (17, 27,...).

9. Composant optique selon une des revendications 1 à 7, caractérisé en ce que la largeur de la plaque de support (42) correspond à la profondeur de l'espace de guidage (47).

10. Composant optique selon une des revendications 1 à 9, caractérisé en ce que l'espace de guidage (57) est formé de deux creux dans les surfaces des deux plaques de support (50, 51), et que les bandes d'électrode (55, 56) sont formées sur les parois extérieures des plaques de support (50, 51) dans la zone de la plaque de réglage (52).

# FIG.1

FQ,FU

1

−Q

Q

a

ε

x

ε₀

d

2

S

U

# FIG.2

10

11

13

14

n2

19

12

16

15

# FIG.3

11

15

18

A1

AK

A

14

19

B

12

Bi

Bj

8

# FIG.4

# FIG.5

# FIG.6

# FIG.7

# FIG.8

# FIG.9

# FIG.10

# FIG.11

Ansicht X

# FIG.12

# FIG.13

$N_{opt}(\lambda)$

(A) → (B)

$\lambda$

# FIG.14